(19) Europäisches Patentamt / European Patent Office / Office européen des brevets

(11) **EP 2 747 039 B1**

(12) **FASCICULE DE BREVET EUROPEEN**

(45) Date de publication et mention
de la délivrance du brevet:
**19.02.2020 Bulletin 2020/08**

(51) Int Cl.:
***G07C 9/00*** *(2020.01)* ***H04B 1/00*** *(2006.01)*

(21) Numéro de dépôt: **12199249.9**

(22) Date de dépôt: **21.12.2012**

(54) **Télécommande pour automobile comportant un dispositif de suppression de couplage magnétique**

Kraftfahrzeugsfernbedienung mit Unterdrückungsvorrichtung für magnetische Kupplung

Motor vehicle remote control comprising a magnetic coupling cancellation device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**25.06.2014 Bulletin 2014/26**

(73) Titulaires:
• **Valeo Sécurité Habitacle**
**94046 Créteil Cedex (FR)**
• **Valeo Interior Controls (Shenzhen) Co., Ltd**
**518128 Shenzhen (CN)**

(72) Inventeurs:
• **Robineau, José**
**94046 Créteil Cedex (FR)**

• **Tessier, Jean-Michel**
**94046 Créteil Cedex (FR)**
• **Yalong, Liu**
**518128 Shenzhen (CN)**
• **Chunlin, Wu**
**518128 Shenzhen (CN)**

(74) Mandataire: **Larger, Solène et al**
**VALEO SECURITE HABITACLE**
**76, rue Auguste Perret**
**Zone Industrielle Europarc**
**94046 Créteil, Cedex (FR)**

(56) Documents cités:
**EP-A1- 0 903 456** **JP-A- 2000 216 716**
**US-A1- 2010 003 941** **US-A1- 2010 137 019**

## Description

## DOMAINE TECHNIQUE DE L'INVENTION

Le domaine technique de l'invention est, d'une façon générale, celui des dispositifs électroniques intégrant des antennes radiofréquence, et plus particulièrement celui des télécommandes pour ouverture/fermeture de portes et démarrage d'une automobile par ondes radio.

La présente invention concerne une télécommande comportant au moins deux antennes radiofréquence, la géométrie de la télécommande faisant qu'il existe une forte intégration de ces antennes, et donc une forte interaction entre elles.

## ETAT DE LA TECHNIQUE ANTERIEUR

L'arrivée sur le marché automobile de systèmes d'accès et de démarrage dit « mains libres » ou « hands free » permettant le verrouillage et le déverrouillage manuel ou automatique des portes d'un véhicule, ainsi que le démarrage de son moteur sans l'utilisation d'une clef traditionnelle, implique la cohabitation dans un volume restreint (le volume d'une tête de clef électronique) de deux systèmes distincts de communication sans fil possédant chacun leur propre antenne d'émission/réception. Une telle clef est divulguée par le document EP0903456 A1.

Dans le but de préserver une ergonomie et un style approprié pour cette clef, la surface et le volume attribués à la partie électronique imposent une forte proximité, voire une imbrication des antennes radiofréquence présentes sur le circuit électronique.

Le document US2010/0137019 A1 divulgue un téléphone mobile comportant une antenne et le téléphone dispose d'un point de connexion électrique permettant une connexion électrique externe d'un haut-parleur mains libres intégré. Une bobine de découplage découple électriquement la bobine acoustique du haut-parleur du point de connexion à une fréquence supérieure à la fréquence de fonctionnement du haut-parleur. La bobine de découplage est positionnée à proximité de l'un des points de la bobine acoustique du haut-parleur. L'inductance de la bobine de découplage est adaptée pour réduire la charge de la bobine acoustique du haut-parleur sur l'antenne du téléphone mobile.

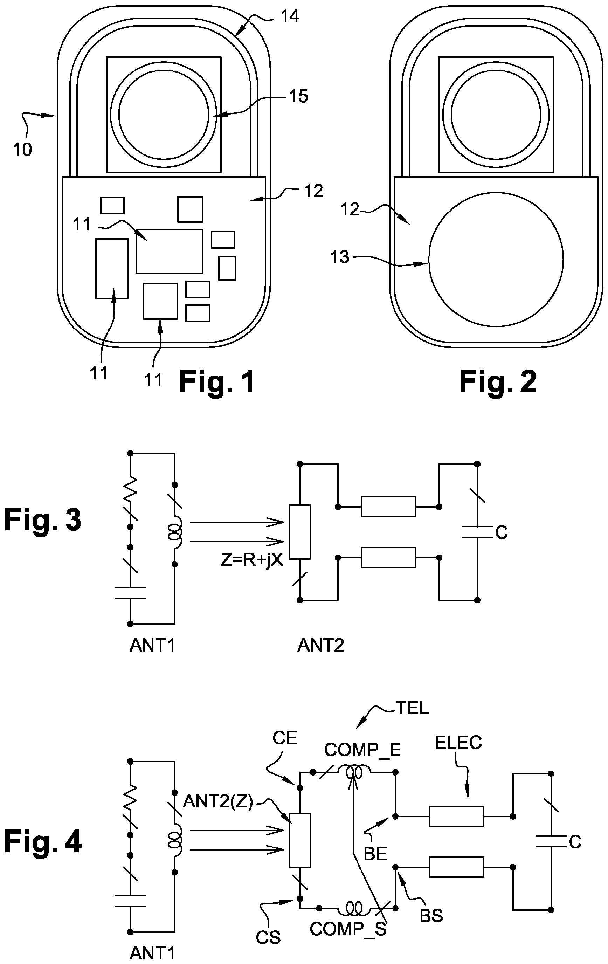

On connaît une télécommande pour ouverture/fermeture de portes et démarrage du moteur, dont un recto est représenté à la figure 1 et un verso est représenté à la figure 2, qui comporte :

- un circuit imprimé 10 comprenant un ensemble de composants électroniques 11, rempli pour moitié d'un plan de masse 12, et supportant une pile d'alimentation 13,
- une piste conductrice 14 disposée le long du circuit 10 et formant, avec le plan de masse 12, une surface optimisée servant d'antenne radiofréquence, appelée première antenne ANT1, pour des fréquences comprises entre 300 et 1000MHz, notamment dans les bandes 315MHz, 434MHz et 868MHz.

- une antenne magnétique, appelée deuxième antenne ANT2, composée de trois bobines orthogonales, dont une boucle 15 est située dans le plan du circuit imprimé 10, servant d'antenne de communication pour le système transpondeur et « mains libres », et fonctionnant à la basse fréquence de 125kHz.

On note que deux boucles d'antennes fonctionnant sur des gammes de fréquences différentes sont ainsi comprises dans un même plan.

L'optimisation des performances de chaque partie de la télécommande est faite en accordant chaque antenne de manière à faire circuler un courant maximal dans la première antenne ANT1, ou à produire une tension maximale aux bornes de la deuxième antenne ANT2. La tension aux bornes de la deuxième antenne ANT2 est notamment maximisée par une capacité C dont la valeur est calculée de sorte à réaliser un accord à 125kHz avec la partie inductive L de la deuxième antenne ANT2 suivant la relation :

$$f_{Accord} = \frac{1}{2\pi\sqrt{LC}}$$

Le schéma électronique équivalent à la télécommande est représenté à la figure 3.

A d'autres fréquences, et particulièrement dans la bande de 300 à 1000MHz, la capacité d'accord C préalablement calculée représente une impédance de très faible valeur (équivalente à un court-circuit) alors que la deuxième antenne ANT2, c'est-à-dire une boucle magnétique, est équivalente à une impédance complexe avec une partie imaginaire X positive ou négative : $Z = R + j X$

La présence physique de cet élément Z associé à la capacité d'accord C à 125kHz (court circuit en hautes fréquences) et des pistes du circuit électronique reliant les différents composants, forment un circuit secondaire pouvant s'accorder à une fréquence comprise dans la bande de 300 à 1000MHz, créant ainsi une boucle parasite non voulue, et de fréquence d'accord fonction de la valeur de la partie imaginaire X et du routage du circuit imprimé.

Suivant les lois de la physique et de l'électromagnétique, la présence sur le même plan de deux boucles, la première antenne (fonctionnant entre 300 à 1000MHz) et une boucle de la deuxième antenne (fonctionnant à 125kHz) engendre un couplage inductif entre ces deux éléments. Il s'en suit que lors de l'utilisation de la première antenne en mode émission, le courant circulant dans la boucle principale correspondant à la première antenne, engendre la création d'un champ magnétique. Par couplage inductif, ce champ provoque dans la boucle secondaire (deuxième antenne) un champ magnétique induit s'opposant au champ de la boucle principale.

Cette réaction provoque une absorption non voulue de l'énergie transmise à la première antenne et donc une diminution du champ électrique rayonné par cette antenne. De la même manière, par le principe de dualité, un récepteur utilisant cette antenne verra sa performance de sensibilité dégradée. Ainsi, une diminution de la distance de fonctionnement de la télécommande radio fréquence est observée. On note que cette situation est non prévisible puisqu'elle est fonction de la valeur de la réactance de l'impédance de la deuxième antenne dans une bande de fréquence pour laquelle celle-ci n'est pas spécifiée.

Plusieurs solutions existent pour contrecarrer cet effet, mais celles-ci présentent toutes des inconvénients :

- Une première solution consiste à modifier le routage de la carte électronique en vue de réduire la partie inductive des pistes menant à la deuxième antenne. Cependant, la résonnance du circuit parasite est toujours présente en haute fréquence de par la nécessité du placement dimensionnel des composants du circuit.

- Une seconde solution consiste à trier les deuxièmes antennes pour ne sélectionner que des composants dont la valeur de la partie imaginaire est positive. Cependant, cette solution est onéreuse pour une production en grande quantité.
- Une troisième solution consiste à augmenter la puissance fournie à la première antenne pour revenir au niveau requis. Cependant, une limitation de puissance imposée par les composants électroniques est à respecter. De plus, le système d'alimentation par pile au lithium n'est pas capable de fournir l'énergie nécessaire. Enfin, il existe un risque de saturation et d'accrochage parasite du composant alimentant la première antenne, entraînant un dysfonctionnement du système, voire une destruction des composants.

## DESCRIPTION GENERALE DE L'INVENTION

L'objet de l'invention est donc de proposer une télécommande pour le verrouillage/déverrouillage et le démarrage d'un véhicule automobile ne présentant pas de problèmes de couplage magnétique.

Pour ce faire, l'invention propose une télécommande pour le verrouillage/déverrouillage et le démarrage d'un véhicule automobile suivant les caractéristiques de la revendication indépendante 1.

Grâce à l'invention, la partie imaginaire de l'impédance de l'antenne LF vue en haute fréquence est toujours positive. Ainsi, la boucle secondaire n'étant jamais capacitive, elle ne peut pas s'accorder avec la boucle principale. La boucle secondaire étant isolée de la boucle principale, le couplage magnétique est évité.

Outre les caractéristiques qui viennent d'être évoquées dans le paragraphe précédent, la télécommande selon l'invention peut présenter une ou plusieurs caractéristiques complémentaires parmi les suivantes, considérées individuellement ou selon toutes les combinaisons techniquement possibles :

- la valeur inductive du composant d'entrée et/ou la valeur inductive du composant de sortie sont inférieures à un pourcent de la valeur inductive de la deuxième antenne. Ainsi, le composant d'entrée et/ou le composant de sortie participent peu à l'inductance de la boucle.
- le composant d'entrée est positionné de sorte à minimiser la distance entre le connecteur d'entrée et la broche d'entrée, et/ou le composant de sortie est positionné de sorte à minimiser la distance entre le connecteur de sortie et la broche de sortie.
- le composant d'entrée est directement connecté au connecteur d'entrée et/ou le composant de sortie est directement connecté au connecteur de sortie.
- le composant d'entrée et/ou le composant de sortie sont intégrés dans le boîtier de la deuxième antenne.
- la valeur réactive de l'impédance de la deuxième boucle est positive.
- le circuit électronique comporte au moins deux voies, et la voie considérée est celle présentant le plus de risques de couplage inductif entre la première boucle et la deuxième boucle.
- le composant d'entrée et/ou le composant de sortie sont des inductances pures.

L'invention et ses différentes applications seront mieux comprises à la lecture de la description qui suit et à l'examen des figures qui l'accompagnent.

## BREVE DESCRIPTION DES FIGURES

Les figures ne sont présentées qu'à titre indicatif et nullement limitatif de l'invention. Les figures montrent :

- à la figure 1, déjà décrite, une représentation schématique d'un recto d'une télécommande pour automobile selon l'art antérieur,
- à la figure 2, déjà décrite, une représentation schématique d'un verso de la télécommande de la figure 1,
- à la figure 3, déjà décrite, un schéma électronique équivalent à une télécommande pour automobile selon l'art antérieur,
- à la figure 4, un schéma électronique équivalent à une télécommande pour automobile selon un mode de réalisation de l'invention,
- à la figure 5, un exemple de réalisation d'une télécommande pour automobile selon un mode de réalisation de l'invention,

- à la figure 6, une courbe illustrant l'impact du couplage magnétique entre deux antennes d'une télécommande selon l'art antérieur, sur la résonance d'une de ces antennes,
- à la figure 7, une courbe illustrant la résonance de l'antenne en question, suite à la suppression du couplage magnétique entre les deux antennes.

**DESCRIPTION DETAILLEE D'AU MOINS UN MODE DE REALISATION DE L'INVENTION**

Sauf précision contraire, un même élément apparaissant sur des figures différentes présente une référence unique.

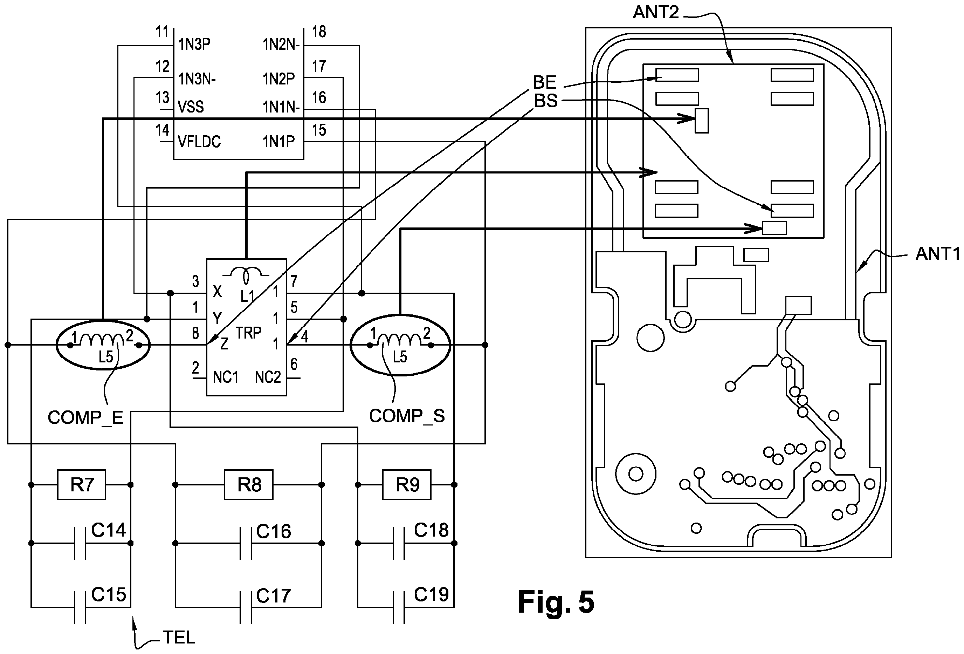

Les figures 4 et 5 illustrent un schéma électronique équivalent à une télécommande TEL pour automobile selon un mode de réalisation non limitatif de l'invention.

La télécommande TEL comporte :

- un circuit électronique ELEC comprenant une voie comportant une broche d'entrée BE et une broche de sortie BS,
- une première antenne radiofréquence ANT1 comprenant une première boucle disposée dans le plan du circuit électronique, fonctionnant à hautes fréquences, notamment entre 300 et 1000MHz,
- une deuxième antenne radiofréquence ANT2 comprenant une deuxième boucle disposée dans le plan du circuit électronique, fonctionnant à basse fréquence, notamment à 125kHz, ladite deuxième antenne ANT2 comportant :

     ◦ un connecteur d'entrée CE connecté à la broche d'entrée BE,
     ◦ un connecteur de sortie CS connecté à la broche de sortie BS,

- une capacité d'accord C reliée au circuit électronique ELEC, pour accorder la deuxième antenne ANT2 sur une fréquence d'accord, comme expliqué précédemment.

Comme expliqué précédemment, en hautes fréquences, la capacité d'accord C préalablement calculée représente une impédance de très faible valeur (équivalente à un court-circuit) alors que la deuxième antenne ANT2, c'est-à-dire une boucle magnétique, est équivalente à une impédance complexe Z avec une partie imaginaire X positive ou négative : $Z = R + j\,X$.

Dans le mode de réalisation décrit, un composant inductif est introduit sur chaque connecteur de la deuxième antenne ANT2, ladite deuxième antenne ANT2 étant une boucle magnétique fonctionnant à 125kHz. Plus précisément, un composant d'entrée COMP_E inductif est placé entre le connecteur d'entrée CE et la broche d'entrée BE, et un composant de sortie COMP_S inductif est placé entre le connecteur de sortie

CS et la broche de sortie BS. Ceci a pour effet de rendre la partie imaginaire X de l'impédance Z de la deuxième antenne ANT2 vue en haute fréquence (entre 300 et 1000MHz) toujours positive.

Le composant d'entrée COMP_E et le composant de sortie COMP_S sont idéalement des inductances pures, mais sont, dans d'autres modes de réalisation, des impédances ou des inductances d'arrêt par exemple. La valeur de ces composants est calculée de sorte qu'en basse fréquence (par exemple à 125kHz) leur introduction dans chacun des connecteurs CE, CS de la deuxième antenne ANT2 ne provoque pas de modification notable de l'accord initial de ladite deuxième antenne ANT2. Idéalement, cette valeur correspond à moins de un pourcent de la valeur inductive de la deuxième antenne ANT2. La valeur doit néanmoins être suffisante pour rejeter la fréquence de résonnance de la boucle parasite en dessous du début de la bande 300-1000MHz.

Par ailleurs, le placement des composants COMP_E, COMP_S, est réalisé de sorte à réduire au minimum la distance entre les connecteurs CE, CS de la deuxième antenne ANT2 et le début de la piste conductrice menant à la capacité d'accord C ainsi qu'au reste du circuit électronique. Le meilleur positionnement se situe directement à la sortie des plages de soudure de la deuxième antenne ANT2. Dans un mode de réalisation, les composants COMP_E, COMP_S sont intégrés directement dans le boîtier de la deuxième antenne ANT2.

Ainsi, à la fréquence de travail de la deuxième antenne ANT2 (125kHz), l'impact de l'addition des deux composants inductifs COMP_E, COMP_S est non significatif devant la valeur de la partie inductive de la deuxième antenne ANT2. Le rapport est en effet inférieur à 0,01%. De même, la résistance de perte des deux composants inductifs COMPE, COMP_S, non représentée à la figure 3, est largement inférieure à la valeur résistive de la deuxième antenne ANT2.

De plus, en haute fréquence (entre 300 et 1000MHz), la valeur réactive de l'impédance de chacune des deux composants inductifs COMP_E, COMP_S ajoutés (à valeur imaginaire positive) est en mesure d'effacer complètement la partie négative de la réactance de l'impédance Z (valant X à la fréquence de la première antenne ANT1) de sorte que cette dernière valeur soit toujours positive.

En haute fréquence, il y a donc séparation virtuelle, au vu des impédances mises en jeu, entre la bobine de la deuxième antenne ANT2 et le reste de l'électronique de la télécommande TEL.

Ainsi on empêche, en haute fréquence, la circulation du courant induit par le couplage magnétique entre la première antenne ANT1 et la deuxième antenne ANT2 provenant de la présence, dans le circuit de la deuxième antenne ANT2, d'une impédance de très forte valeur rendant ce courant quasiment nul. Il n'y a donc plus, ou presque plus d'interaction magnétique entre les antennes ANT1, ANT2.

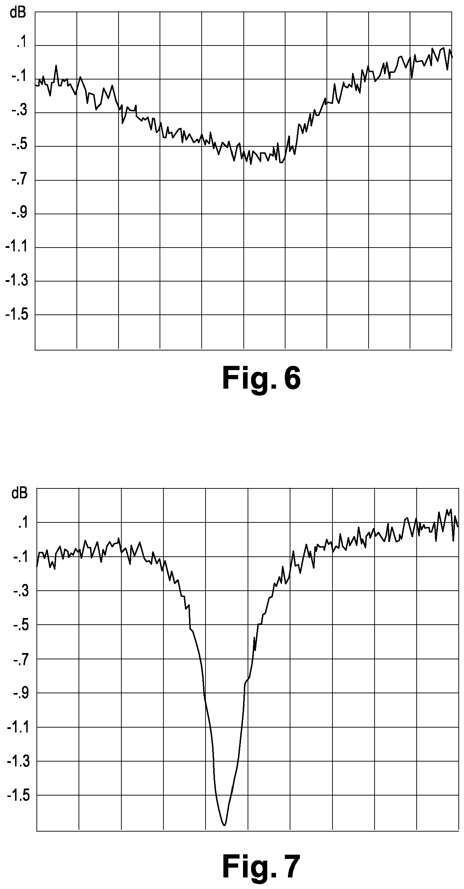

Les figures 6 et 7 illustrent l'apport de l'invention à une fréquence de 434MHz. Dans l'exemple illustré, les deux composants inductifs COMP_E, COMP_S ont pour valeur 100nH. Dans le cas représenté à la figure 6, les deux composants inductifs COMP_E, COMP_S sont court-circuités, ce qui correspond aux télécommandes de l'art antérieur, tandis que dans le cas représenté à la figure 7, les deux composants inductifs COMP_E, COMP_S sont en service. La comparaison des courbes montre l'efficacité de la séparation en haute fréquence des deux antennes ANT1, ANT2. On note la résonnance propre de la première antenne ANT1 dont le facteur de qualité n'est plus gêné par l'absorption de la deuxième antenne ANT2 due au couplage magnétique.

Par ailleurs, dans un mode de réalisation, le procédé de fabrication de la deuxième antenne ANT2 est modifié pour assurer que dans la bande de fréquences 300 à 1000MHz, la valeur réactive de l'impédance Z ne soit jamais négative. En outre, dans un autre mode de réalisation, les composants inductifs COMP_E, COMP_S sont introduits dans le corps du composant de la deuxième antenne ANT2, entre les connecteurs CE, CS de la deuxième antenne ANT2 et le début du bobinage de la voie présentant le plus de risques de couplage inductif.

## Revendications

1. Télécommande (TEL) pour le verrouillage/déverrouillage et le démarrage de véhicule automobile comportant :

   - un circuit électronique (ELEC) comprenant au moins une voie comportant une broche d'entrée (BE) et une broche de sortie (BS),
   - une première antenne (ANT1) radiofréquence comprenant une première boucle disposée dans le plan du circuit électronique (ELEC) fonctionnant à hautes fréquences,
   - une deuxième antenne (ANT2) radiofréquence comprenant une deuxième boucle disposée dans le plan du circuit électronique (ELEC), ladite deuxième antenne (ANT2) fonctionnant à basses fréquences et étant équivalente à une impédance complexe Z avec une partie imaginaire X, ladite deuxième antenne (ANT2) comportant :

     ∘ un connecteur d'entrée (CE) connecté à la broche d'entrée (BE),
     ∘ un connecteur de sortie (CS) connecté à la broche de sortie (BS),

   - une capacité d'accord (C) reliée au circuit électronique (CIRC), pour accorder la deuxième antenne (ANT2) sur une fréquence d'accord,

   la deuxième antenne (ANT 2) comporte un composant d'entrée (COMP_E) inductif et/ou un composant de sortie (COMP_S) inductif, lesdits composants étant adaptés pour que la partie imaginaire X de l'impédance complexe Z soit toujours positive, ledit composant d'entrée (COMP_E) inductif étant pour cela placé entre le connecteur d'entrée (CE) et la broche d'entrée (BE), et ledit composant de sortie (COMP_S) inductif étant pour cela placé entre le connecteur de sortie (CS) et la broche de sortie (BS).

2. Télécommande (TEL) selon la revendication précédente, **caractérisée en ce que** la valeur inductive du composant d'entrée (COMP_E) et/ou la valeur inductive du composant de sortie (COMP_S) sont inférieures à un pourcent de la valeur inductive de la deuxième antenne (ANT2).

3. Télécommande (TEL) selon l'une des revendications précédentes, **caractérisée en ce que** le composant d'entrée (COMP_E) est positionné de sorte à minimiser la distance entre le connecteur d'entrée (COMP_E) et la broche d'entrée (BE), et/ou le composant de sortie (COMP_S) est positionné de sorte à minimiser la distance entre le connecteur de sortie (CS) et la broche de sortie (BS).

4. Télécommande (TEL) selon l'une des revendications précédentes, **caractérisée en ce que** le composant d'entrée (COMP_E) est directement connecté au connecteur d'entrée (CE) et/ou le composant de sortie (COMP_S) est directement connecté au connecteur de sortie (CS).

5. Télécommande (TEL) selon l'une des revendications précédentes, **caractérisée en ce que** le composant d'entrée (COMP_E) et/ou le composant de sortie (COMP_S) sont intégrés dans le boîtier de la deuxième antenne (ANT2).

6. Télécommande (TEL) selon l'une des revendications précédentes, **caractérisée en ce que** la valeur réactive de l'impédance de la deuxième boucle est positive.

7. Télécommande (TEL) selon l'une des revendications précédentes, **caractérisée en ce que** le circuit électronique (ELEC) comporte au moins deux voies, et la voie considérée est celle présentant le plus de risques de couplage inductif entre la première boucle et la deuxième boucle.

8. Télécommande (TEL) selon l'une des revendications précédentes, **caractérisée en ce que** le composant d'entrée (COMP_E) et/ou le composant de sortie (COMP_S) sont des inductances pures.

**Patentansprüche**

1. Fernbedienung (TEL) zum Verriegeln/Entriegeln und zum Start eines Kraftfahrzeugs, die aufweist:

> - einen elektronischen Schaltkreis (ELEC), der mindestens einen Pfad enthält, der einen Eingangsanschluss (BE) und einen Ausgangsanschluss (BS) aufweist,
> - eine erste Funkfrequenzantenne (ANT1), die eine in der Ebene des elektronischen Schaltkreises (ELEC) angeordnete erste Schleife enthält, die mit hohen Frequenzen arbeitet,
> - eine zweite Funkfrequenzantenne (ANT2), die eine in der Ebene des elektronischen Schaltkreises (ELEC) angeordnete zweite Schleife enthält, wobei die zweite Antenne (ANT2) mit niedrigen Frequenzen arbeitet und einer komplexen Impedanz Z mit einem Imaginärteil X entspricht, wobei die zweite Antenne (ANT2) aufweist:
>
>> ◦ einen mit dem Eingangsanschluss (BE) verbundenen Eingangsverbinder (CE),
>> ◦ einen mit dem Ausgangsanschluss (BS) verbundenen Ausgangsverbinder (CS),
>
> - eine mit dem elektronischen Schaltkreis (CIRC) verbundene Abstimmkapazität (C), um die zweite Antenne (ANT2) auf eine Abstimmfrequenz abzustimmen,

wobei die zweite Antenne (ANT2) ein induktives Eingangsbauteil (COMP_E) und/oder ein induktives Ausgangsbauteil (COMP_S) aufweist, wobei die Bauteile so angepasst sind, dass der Imaginärteil X der komplexen Impedanz Z immer positiv ist, wobei das induktive Eingangsbauteil (COMP_E) hierzu zwischen dem Eingangsverbinder (CE) und dem Eingangsanschluss (BE) angeordnet ist, und das induktive Ausgangsbauteil (COMP_S) hierzu zwischen dem Ausgangsverbinder (CS) und dem Ausgangsanschluss (BS) angeordnet ist.

2. Fernbedienung (TEL) nach dem vorhergehenden Anspruch, **dadurch gekennzeichnet, dass** der Induktivwert des Eingangsbauteils (COMP_E) und/oder der Induktivwert des Ausgangsbauteils (COMP_S) niedriger als ein Prozent des Induktivwerts der zweiten Antenne (ANT2) sind.

3. Fernbedienung (TEL) nach einem der vorhergehenden Ansprüche, **dadurch gekennzeichnet, dass** das Eingangsbauteil (COMP_E) so positioniert ist, dass der Abstand zwischen dem Eingangsverbinder (COMP_E) und dem Eingangsanschluss (BE) minimiert ist, und/oder das Ausgangsbauteil (COMP_S) so positioniert ist, dass der Abstand zwischen dem Ausgangsverbinder (CS) und dem Ausgangsanschluss (BS) minimiert ist.

4. Fernbedienung (TEL) nach einem der vorhergehenden Ansprüche, **dadurch gekennzeichnet, dass** das Eingangsbauteil (COMP_E) direkt mit dem Eingangsverbinder (CE) verbunden ist und/oder das Ausgangsbauteil (COMP_S) direkt mit dem Ausgangsverbinder (CS) verbunden ist.

5. Fernbedienung (TEL) nach einem der vorhergehenden Ansprüche, **dadurch gekennzeichnet, dass** das Eingangsbauteil (COMP_E) und/oder das Ausgangsbauteil (COMP_S) in das Gehäuse der zweiten Antenne (ANT2) integriert sind.

6. Fernbedienung (TEL) nach einem der vorhergehenden Ansprüche, **dadurch gekennzeichnet, dass** der Reaktivwert der Impedanz der zweiten Schleife positiv ist.

7. Fernbedienung (TEL) nach einem der vorhergehenden Ansprüche, **dadurch gekennzeichnet, dass** der elektronische Schaltkreis (ELEC) mindestens zwei Pfade aufweist, und dass der betrachtete Pfad derjenige ist, der die meisten Gefahren einer induktiven Kopplung zwischen der ersten Schleife und der zweiten Schleife aufweist.

8. Fernbedienung (TEL) nach einem der vorhergehenden Ansprüche, **dadurch gekennzeichnet, dass** das Eingangsbauteil (COMP_E) und/oder das Ausgangsbauteil (COMP_S) reine Induktivitäten sind.

**Claims**

1. Telecontrol (TEL) for locking/unlocking and starting a motor vehicle comprising:

> - an electronic circuit (ELEC) including at least one path comprising an input pin (BE) and an output pin (BS),
> - a first radio frequency antenna (ANT1) including a first loop arranged in the plane of the electronic circuit (ELEC) operating at high frequencies,
> - a second radio frequency antenna (ANT2) including a second loop arranged in the plane of the electronic circuit (ELEC), said second antenna (ANT2) operating at low frequencies and being equivalent to a complex impedance Z with an imaginary portion X, said second antenna (ANT2) comprising:
>
>> ◦ an input connector (CE) connected to the input pin (BE),
>> ◦ an output connector (CS) connected to the output pin (BS),

- a tuning capacitor (C) connected to the electronic circuit (CIRC), for tuning the second antenna (ANT2) on a tuning frequency,

the second antenna (ANT2) comprising an inductive input component (COMP_E) and/or an inductive output component (COMP_S), said components being designed so that the imaginary portion X of the complex impedance Z is always positive, said inductive input component (COMP_E) being, to that end, placed between the input connector (CE) and the input pin (BE), and said inductive output component (COMP_S) being, to that end, placed between the output connector (CS) and the output pin (BS).

2. Telecontrol (TEL) according to the preceding claim, **characterized in that** the inductive value of the input component (COMP_E) and/or the inductive value of the output component (COMP_S) are less than one percent of the inductive value of the second antenna (ANT2).

3. Telecontrol (TEL) according to either of the preceding claims, **characterized in that** the input component (COMP_E) is positioned so as to minimize the distance between the input connector (COMP_E) and the input pin (BE), and/or the output component (COMP_S) is positioned so as to minimize the distance between the output connector (CS) and the output pin (BS).

4. Telecontrol (TEL) according to one of the preceding claims, **characterized in that** the input component (COMP_E) is directly connected to the input connector (CE) and/or the output component (COMP_S) is directly connected to the output connector (CS).

5. Telecontrol (TEL) according to one of the preceding claims, **characterized in that** the input component (COMP_E) and/or the output component (COMP_S) are integrated into the housing of the second antenna (ANT2).

6. Telecontrol (TEL) according to one of the preceding claims, **characterized in that** the reactive impedance value of the second loop is positive.

7. Telecontrol (TEL) according to one of the preceding claims, **characterized in that** the electronic circuit (ELEC) comprises at least two paths, and the path considered is that presenting the most risk of inductive coupling between the first loop and the second loop.

8. Telecontrol (TEL) according to one of the preceding claims, **characterized in that** the input component (COMP_E) and/or the output component (COMP_S) are pure inductances.

**Fig. 1**

**Fig. 2**

**Fig. 3**

**Fig. 4**

Fig. 5

**Fig. 6**

**Fig. 7**

**EP 2 747 039 B1**

## RÉFÉRENCES CITÉES DANS LA DESCRIPTION

**Documents brevets cités dans la description**

- EP 0903456 A1

- US 20100137019 A1